# EUROPEAN PATENT APPLICATION

(11) **EP 3 364 630 A1**
(43) Date of publication of application: **22.08.2018**
(21) Application number: 17156996.5
(22) Date of filing: 20.02.2017
(51) Int. Cl.: H04L 29/08, H04L 29/12

(54) **A METHOD OF DISTRIBUTING LOAD AND A NETWORK APPARATUS**

(71) Applicant: Nokia Solutions and Networks Oy, 02610 Espoo (FI)
(72) Inventor: KUCERA, Stepan, Dublin 15 (IE); FAHMI, Kariem, Dublin 15 (IE)
(74) Representative: Bryers LLP

(57) **Abstract**

A method of distributing load associated with respective sessions between interfaces of multiple virtual machine instances or network apparatus configured to execute a service in a network, the method comprising mapping respective ones of the multiple virtual machine instances or network apparatus to identifiers associated with a network device, receiving a request to initiate a session to use the service, selecting a virtual machine instance or network apparatus for the session using an identifier and mapping a sub-flow for the session to the selected virtual machine or network apparatus instance using the identifier.

## Description

### TECHNICAL FIELD

Aspects relate, in general, to a method of distributing load and a network apparatus.

### BACKGROUND

Demand for mobile data has roughly doubled every year and a 15-fold increase in data traffic is expected in developed markets by 2020, while developing markets could potentially experience a 60-fold increase.

To accommodate the surge in demand for network bandwidth, multi-connectivity technologies such as 3GPP LTE/WiFi integration (LWIP) and the IETF multi-path transport control protocol (MPTCP) can be used. Such multi-connectivity technologies enable the seamless aggregation of the capacity of multiple radio interfaces such as LTE, HSPA, and WiFi for a high-speed delivery of wireless data over multiple parallel paths.

### SUMMARY

According to an example, there is provided a method of distributing load associated with respective sessions between interfaces of multiple virtual machine instances or network apparatus configured to execute a service in a network, the method comprising mapping respective ones of the multiple virtual machine instances or network apparatus to identifiers associated with a network device, receiving a request to initiate a session to use the service, selecting a virtual machine instance or network apparatus for the session using an identifier and mapping a sub-flow for the session to the selected virtual machine or network apparatus instance using the identifier. The identifiers can be in the form of tuples comprising a destination address and a port number selected from multiple port numbers associated with the network device. The method can further comprise generating a set of records, each record specifying the logical location of a virtual machine instance or network apparatus using the identifiers. The method can further comprise generating a request for a record and providing a selected identifier for a virtual machine instance or network apparatus. The method can further comprise initiating the session using the virtual machine instance or network apparatus characterised by the identifier and distributing related sub-flows of the session to the virtual machine instance or network apparatus using the identifier. A list of available IP address and port number information can be provided to a load balancer of the network. The method can further comprise, at the load balancer, modifying port-forward mappings to vary load distribution across the virtual machine instances or network apparatus. A virtual machine instance can be deactivated in response to a change in the load.

According to an example, there is provided a network load balancing apparatus configured to distribute load associated with respective sessions between interfaces of multiple virtual machine instances or network apparatus configured to execute a service in a network, the network load balancing apparatus configured to map respective ones of the multiple virtual machine instances or network apparatus to identifiers associated with a network device, select a virtual machine instance or network apparatus for a session using an identifier and map a sub-flow for the session to the selected virtual machine instance or network apparatus using the identifier. The network load balancing apparatus can register or otherwise provide a list of available destination addresses and port numbers associated with the network device. The network load balancing apparatus can modify port-forward mappings to vary load distribution across the virtual machine instances or network apparatus.

According to an example, there is provided a computer program product, comprising a computer usable medium having computer readable program code embodied therein, said computer readable program code adapted to be executed to implement a method for distributing load associated with respective sessions between interfaces of multiple virtual machine instances or network apparatus configured to execute a service in a network, as provided herein.

### BRIEF DESCRIPTION OF THE DRAWINGS

Embodiments will now be described, by way of example only, with reference to the accompanying drawings, in which:
Figure 1 is a schematic representation of a method according to an example;
Figure 2 is a schematic representation of a system according to an example; and
Figures 3 and 4 are schematic representations to show how multipath load-balancing can be performed transparently for active connections through manipulation of port forward mapping according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

A network service or content can be provided using a virtual machine instance. In this way, the network is able to respond to variations in load by spawning or deleting instances. The general purpose of load balancing is to fairly distribute the connections of multiple users across all available instances of a content server providing data or a service to those users in order to evenly spread traffic load between data centre (cloud) resources. In this way performance bottlenecks can be eliminated.

However, load balancing in multi-connectivity networks is a fundamental challenge as all parallel connections originating from the same mobile device (user equipment) should be assigned to the same serving virtual machine instance otherwise the multi-connectivity session of the device is interrupted. However, a load balancer apparatus has no obvious way to identify and group related connections because, by definition, such connections are transported over independent links within unrelated networks.

Load balancing in multi-connectivity networks can use the features of the MPTCP standard in which session-level identifiers in the form of 32-bit encrypted tokens can be used to identifying sub-flows belonging to the same session. However, this non-systematic approach to sub-flow grouping for load-balancing purposes is not practically deployable in server farms servicing millions of users and in which there is a very high chance of token collisions (two unrelated sessions using the same identifier), thereby causing the sub-flows to be assigned to incorrect servers and MPTCP sessions to fail. Active detection of token collisions is not an option as all active load balancers would then have to collaboratively cross-check the consistency of their internal sessions states, which is highly inefficient and difficult to implement and characterized by large signalling overhead and synchronization difficulties.

According to an example, there is provided a method for server load balancing in large multi-connectivity networks. More specifically, there is provided a method for effective load-balancing of multi-flow sessions among several cloud-based virtual machines (VMs) that implement either a proxy or a content server. The VMs are allocated dynamically by the cloud depending on the traffic volume, and operate in a private IP address space that is separated from the public IP address space of the Internet by at least one Network Address Translator (NAT). With no loss of generality, the VM load balancer is implemented as part of the NAT.

In an example, a domain name system (DNS) server can be used to characterize each MPTCP session by a combination of a destination IP address and port number, and a NAT-based load balancer can identify related sub-flows based on packets having identical network-layer destination entries in their IP headers. The DNS server can uses so-called service (SRV) records to store the pairs of destination IP address and port that effectively identify a virtual machine instance behind the NAT.

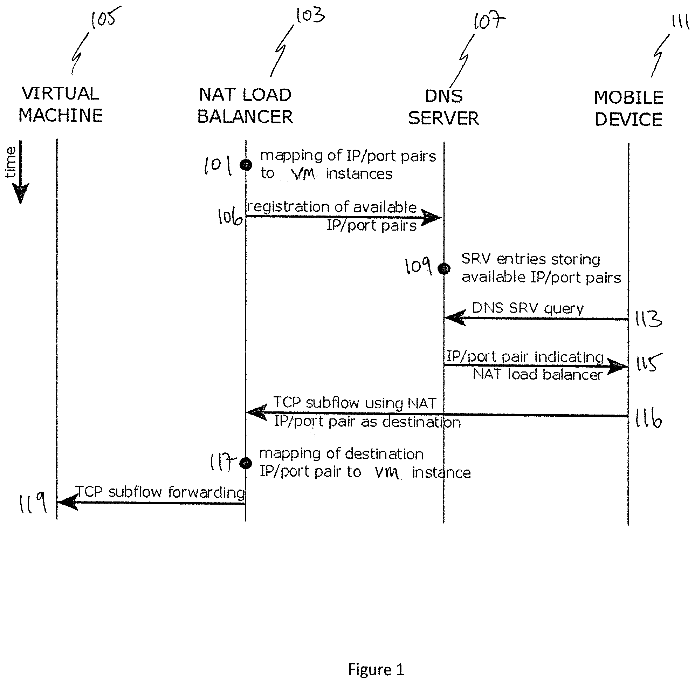

Figure 1 is a schematic representation of a method according to an example. A NAT 103 with load balancing capabilities is created and initialized by configuring a mapping 101 between a set of ports, available to the NAT load balancer 103 (e.g. ports 1000 to 64512), and a set of multi-connectivity virtual machine instances 105, activated by a cloud operator for incoming traffic load balancing,

If not known a priori, the public IP address of the NAT load balancer 103 and its active ports are communicated 106 to a public DNS server 107. The DNS server 107 generates 109 the SRV records associating the public IP address and the usable ports of the NAT load balancer 103.

By using an SRV query 113, a mobile device (user equipment) 111 can request that the public DNS server 107 carry out a standard resolution of a web-service URL address, for example, into a public IP address of a content server. According to an example, the DNS server 107 can reply by selecting 115 one entry in its SRV records (e.g., randomly or sequentially) containing an IP address and port number of a NAT load balancer 103.

The mobile device 111 opens an MPTCP session to communicate with the indicated VM while using 116 the IP address and port provided by the SRV query as the destination IP address and port for all the MPTCP sub-flows. Based on the pre-determined mapping of IP address / port pairs to VM instances, the NAT load balancer 103 maps 117 sub-flows of a given MPTCP session to the same VM instance 105. The load balancer 103 forwards 119 the sub-flow in question to the VM instance 105.

The load balancer 103 can dynamically manipulate port-forward mappings in order to optimize load distribution across VM instances as well as (de)-activate VM instances to resource-efficiently accommodate the current demand. The DNS server is not involved in this optimization.

MPTCP is an end-to-end protocol that must be supported be both the user device and the content server (e.g., a web server). Yet, as relatively recent innovation, MPTCP is currently not supported by the vast majority of legacy web applications and services. For this reason, there is a need for a translation service that affords the benefits of radio interface aggregation for the client device while not requiring explicit support for MPTCP from the web server.

These translation services are referred to as aggregation proxies. These proxies are used to deploy MPTCP in the Internet and they typically service millions of users simultaneously. As such, these proxies can be deployed in a cloud service and scaled according to traffic demand by load-balancing incoming connections among multiple proxy instances.

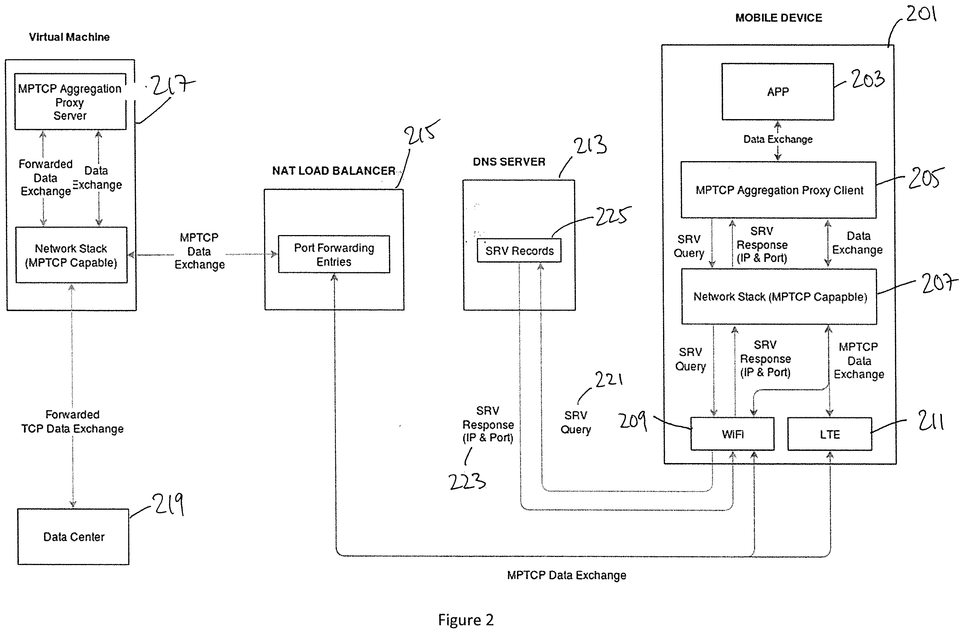

Figure 2 is a schematic representation of a system according to an example. At a mobile device 201 of a network, an application (APP) 203 is a source of outgoing (uplink) traffic and a receiver of incoming (downlink) traffic. In accordance with the Open System Interconnection model, the functionality of the APP is independent of the underlying MPTCP transport layer and the APP designers do not tailor their APPs to MPTCP aspects such as the usage of aggregation proxies.

The user-side MPTCP Proxy Service 205 redirects all outgoing connections to the MPTCP aggregation proxy in order to appear to the network stack as if the end point of the connection supports MPTCP. According to an example, this utilizes SRV queries instead of standard DNS requests to resolve its destination address. The MPTCP-capable Network Stack 207 splits outgoing streams and distributes the packets across the available interfaces 209, 211 according to its scheduling algorithm. It does the reverse to the incoming packets, where they are aggregated from the interfaces and delivered in order to the APP layer.

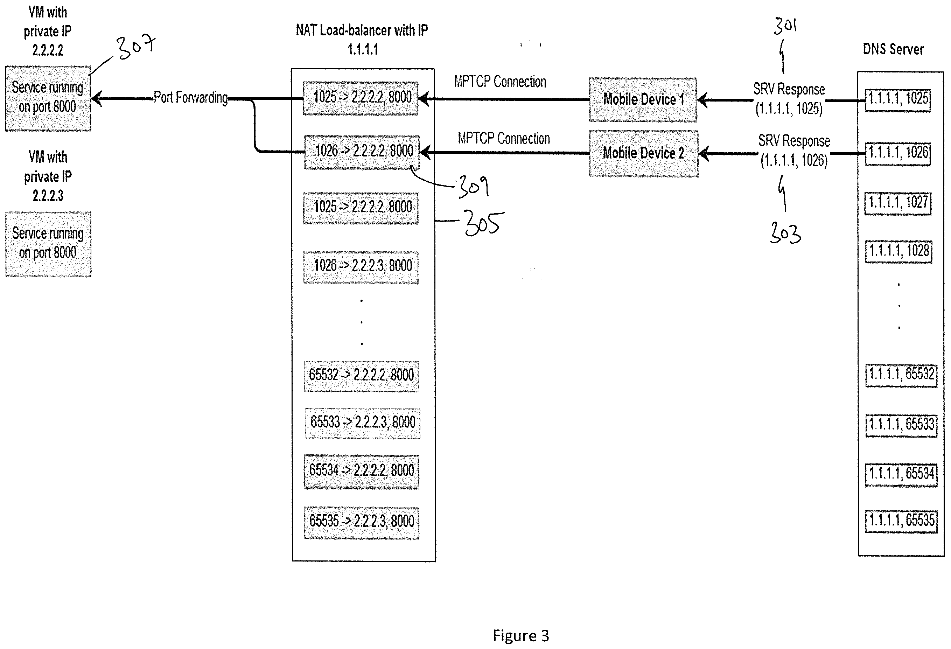

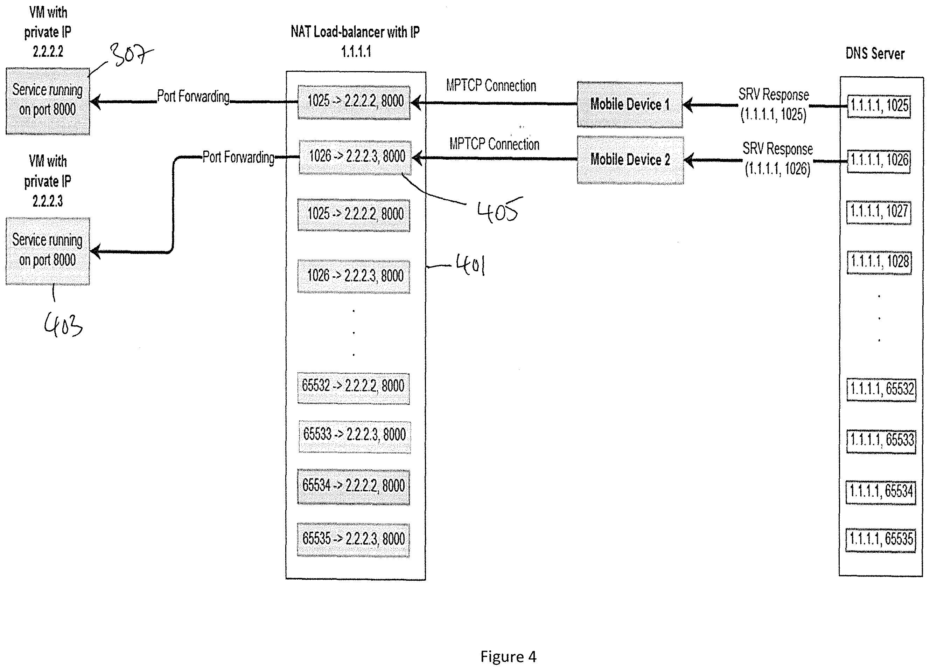

The DNS server 213 is designated at the authoritative name server for the proxy domain, and as such, all requests for that domain can be directed to it. It can answer its SRV requests from users, e.g. in a round-robin fashion. The NAT load balancer 215 is in charge of load balancing incoming connections by utilizing the port forwarding mapping technique as explained subsequently in conjunction with Figs. 3 and 4. There can be multiple active NAT load-balancers, but in an example, only is selected by the DNS.

The network-side MPTCP-capable aggregation proxy 217 is a server that forwards MPTCP connections to the content server 219 by using a standard single-path TCP on the uplink, and reverses this process on the downlink. In an example, it can be implemented as a set of cloud-based virtual machine instances whose number can be controlled as a function of traffic load. The load-balancing mechanism selects one aggregation proxy for each unique MPTCP connection.

According to an example, the load-balancing procedure of MPTCP aggregation proxies is as follows:
The APP 203 initiates a connection to a web service. The MPTCP proxy service 205 running on the device 201 intercepts the connection and beings resolving the DNS of its proxy. The proxy service issues an SRV request 221 to the DNS server 213 and this request is delivered using a single interface. The DNS server 213 responds 223 with an IP and port as defined in one of its SRV entries 225. The proxy service then creates an MPTCP connection using both interfaces 209, 211 to the assigned address and port.

The NAT load-balancer 215 receives the connection request and directs it to one of the MPTCP aggregation proxy VMs (217 in figure 2) as per its port mappings. The VM 217 receives the connection and the data exchange commences between the device 201 and the MPTCP proxy 217 which then forwards the uplink data to the content server 219 using single-path TCP. On the downlink, the opposite will happen - single-path TCP connections are split and forwarded as MPTCP traffic to the mobile device. The number of active aggregation proxies can be adaptively adjusted to meet the user demand.

Figures 3 and 4 are schematic representations to show how multipath load-balancing can be performed transparently for active connections through manipulation of port forward mapping according to an example. Specifically, figure 3 shows an initial system state and figure 4 shows how load balancing can be achieved with modification of the port mapping of the load balancer of figure 3.

In the example of figure 3, Mobile Devices 1 and 2 are assigned a destination address and port (1.1.1.1, 1025 & 1.1.1.1, 1026 respectively) through a SRV response 301, 303 as described above. The destination address corresponds to the public address of the NAT load-balancer 305 and the port is selected randomly. As a result of the NAT load-balancer's port-forward mapping configuration, as shown in figure 3, both Mobile Devices are assigned to the same virtual machine instance 307, which is VM instance with private IP 2.2.2.2 using port 8000.

In the example of figure 4, the load balancer 401 has optimized the scenario transparently by modifying the port-forward mapping and re-assigning all sub-flows of the MPTCP connection of Mobile Device 2 to a different virtual machine 403. That is, mapping 405 corresponding to mapping 309 of figure 3 has been modified from the initial state shown in figure 3 to indicate a different VM instance. Accordingly, device 1 is assigned to VM instance 307 with private IP 2.2.2.2 using port 8000, and device 2 is assigned to VM instance 403 with private IP 2.2.2.3 using port 8000.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method of distributing load associated with respective sessions between interfaces of multiple virtual machine instances or network apparatus configured to execute a service in a network, the method comprising:
mapping respective ones of the multiple virtual machine instances or network apparatus to identifiers associated with a network device;
receiving a request to initiate a session to use the service;
selecting a virtual machine instance or network apparatus for the session using an identifier; and
mapping a sub-flow for the session to the selected virtual machine or network apparatus instance using the identifier.

2. A method as claimed in claim 1, wherein the identifiers are tuples comprising a destination address and a port number selected from multiple port numbers associated with the network device.

3. A method as claimed in claim 1 or 2, further comprising:
generating a set of records, each record specifying the logical location of a virtual machine instance or network apparatus using the identifiers.

4. A method as claimed in claim 3, further comprising:
generating a request for a record; and
providing a selected identifier for a virtual machine instance or network apparatus.

5. A method as claimed in claim 4, further comprising:
initiating the session using the virtual machine instance or network apparatus **characterised by** the identifier; and
distributing related sub-flows of the session to the virtual machine instance or network apparatus using the identifier.

6. A method as claimed in any preceding claim, further comprising providing a list of available IP address and port number information to a load balancer of the network.

7. A method as claimed in claim 6, further comprising:
at the load balancer, modifying port-forward mappings to vary load distribution across the virtual machine instances or network apparatus.

8. A method as claimed in claim 7, further comprising:
deactivating a virtual machine instance in response to a change in the load.

9. A network load balancing apparatus configured to distribute load associated with respective sessions between interfaces of multiple virtual machine instances or network apparatus configured to execute a service in a network, the network load balancing apparatus configured to:
map respective ones of the multiple virtual machine instances or network apparatus to identifiers associated with a network device;
select a virtual machine instance or network apparatus for a session using an identifier; and
map a sub-flow for the session to the selected virtual machine instance or network apparatus using the identifier.

10. A network apparatus as claimed in claim 9, wherein the network load balancing apparatus is configured to register or otherwise provide a list of available destination addresses and port numbers associated with the network device.

11. A network apparatus as claimed in claim 9 or 10, wherein the network load balancing apparatus is configured to modify port-forward mappings to vary load distribution across the virtual machine instances or network apparatus.

12. A computer program product, comprising a computer usable medium having computer readable program code embodied therein, said computer readable program code adapted to be executed to implement a method for distributing load associated with respective sessions between interfaces of multiple virtual machine instances or network apparatus configured to execute a service in a network, as claimed in any of claims 1 to 8.
